# EUROPEAN PATENT APPLICATION

(11) **EP 3 000 755 A1**
(43) Date of publication of application: **30.03.2016**
(21) Application number: 14186612.9
(22) Date of filing: 26.09.2014
(51) Int. Cl.: B65G 67/20, B65G 69/22, B65G 69/24

(54) **Method of double deck vehicle loading and unloading**

(71) Applicant: Dematic Ltd., Oxfordshire OX16 1QZ (GB)
(72) Inventor: Pickerill, Mark, Banbury, Oxfordshire OX16 1QZ (GB); Abbott, Ian, Banbury, Oxfordshire OX16 1QZ (GB); Kreivaitis, Danas, Banbury, Oxfordshire OX16 1QZ (GB); Faulkner, Shane, Banbury, Oxfordshire OX16 1QZ (GB)
(74) Representative: Moser Götze & Partner Patentanwälte mbB

(57) **Abstract**

Method loading or unloading of double deck vehicles (6) having two decks (3A, 3B) for carrying cargo, namely a lower deck (3B) and an upper deck (3A) at least partially on top of the lower deck (3B), in which at least one lifting means (4) are used to raise and lower the cargo (6), especially dollies and or pallets, between the lower and upper deck levels,
wherein loading or unloading of both decks of the double deck vehicle is performed simultaneously by providing access to both the lower and upper level of the vehicle at the same time.

## Description

The invention relates to a method loading or unloading of double deck vehicles having two decks for carrying cargo, namely a lower deck and an upper deck at least partially on top of the lower deck, in which at least one lifting means are used to raise and lower the cargo, especially dollies and or pallets, between the lower and upper deck levels.

A double deck vehicle, especially a double deck truck trailer, is a type of vehicle that has two levels/decks for cargo, as opposed to one, thus increasing capacity.

The use of double-decker trailers, where feasible, can resolve capacity problems on the road, avoiding other options such as longer trailers, more trailers per truck or using extra trucks with trailers.

Currently all double deck vehicle loading is carried out using lifts which enable the lower deck of the vehicle to be loaded in its down position and then will raise up to load the upper deck, which is known from EP 1 775 246 B1 or EP 2 246 280A3. The lifts are arranged or positioned directly at the vehicle between the dispatch opening and the vehicles cargo bay.

Alternatively it is known to use a double deck trailer with an integral lifting floor inside the trailer.

However both known version of loading the double deck trailers currently take over an hour as only one deck can be loaded at any one time.

This reduces capacity, loading efficiency, and significantly increases transport costs.

In contrast thereto, the object of the invention is to provide a method of loading/ unloading with reduced turnaround, without increasing complexity.

This object is achieved by the method stated in claim 1.

In accordance with the invention, it has been recognized that when a reduction of the turnaround of a vehicle by half, is achieved by enabling the simultaneous loading and unloading of a double deck container/trailer on both levels/decks, by providing access to both the lower and upper level of the vehicle at the same time.

This allows for cost, time and space saving, reduced bottleneck in dispatch and improved turnaround for dispatch.

In other words, the invention achieves loading /unloading of double deck vehicle simultaneously by allowing operators or automated devices to load/unload on both the ground and upper level of the vehicle.

The method may be performed by operators and/or with the help of automated devices.

The prior art hinders simultaneous loading of two levels of the trailer, as the lift blocks access to the other level, since it is located right on/next to the trailer and the cargo bay entrance.

Recognizing this, the invention allows simultaneous access to both deck levels by using a two story/level loading dock, which is positioned between the double deck vehicle and the lift. By moving the at least one lifting means away from the vehicle/trailer, access to both levels is free and these can be loaded in parallel.

It is preferred that access from the two loading dock levels to the lower deck and an upper deck levels of the double deck vehicle is provided by an adjustable bridge on each level, so that independent of the vehicle's deck levels the two loading levels can be easily accessed.

The manual (loading) process works by firstly bringing the loads to be shipped to the dispatch area by either manual or automation means, these loads are then marshaled on the ground floor and/or the upper floor, which correspond to the two levels of the loading dock, to await loading.

The vehicle is docked at the dock door in the usual manner and an operator will lower an adjustable bridge from both the lower level and the upper level into the vehicle so unloading and loading can begin.

When loading the lower deck, loads are just moved from the marshalling area to the vehicle. For the upper deck, loads can be raised from the ground floor infeed by a lifting device.

By manual means or by automation, all loads can be then marshalled in a small area of the upper loading dock level while unloading is still in progress, thus saving time.

Thus marshalling can be parallelized to allow vehicle unloading to a higher degree.

Once the vehicle/loading decks are empty the loads are then moved into the vehicle on both the upper and lower levels simultaneously. Once complete the vehicle can then move off and the process repeats itself.

Obviously the unloading process is performed in reverse but analogous order.

Throughput and parallelization can be further improved if at least on two lifting means are provided and one lifting means is used for raising and one lifting means is used for lowering cargo independently of each other.

The automated process may function in a similar way with the help of automated devices for loading and/or unloading of the double deck vehicles. For example by using automated conveying means within the double deck vehicles, like floor conveyors, which interface with appropriate conveying means in the loading/unloading dock, which in in general know from the field of automated pallet loading and unloading of trailers.

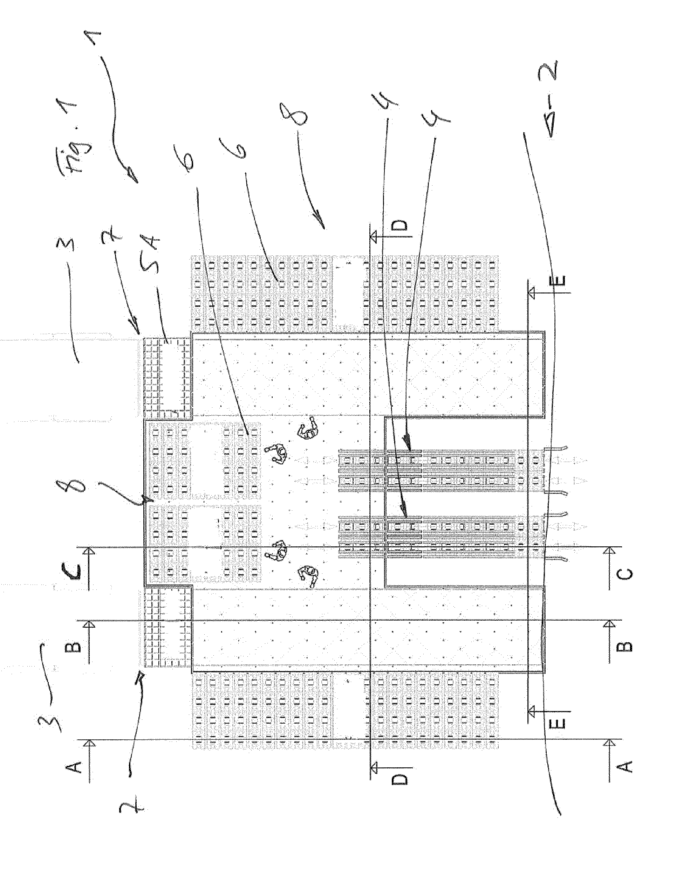

Further features and details of the invention are apparent from the description hereinafter of the drawing, in which
- Figure 1: shows a schematic top view of a loading and unloading dock of a distribution warehouse;

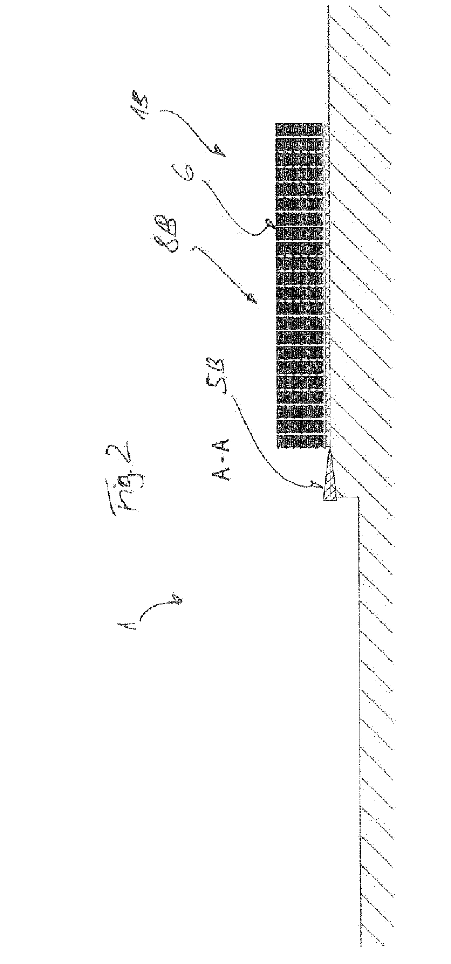

- Figure 2: shows a section view along the line A-A of figure 1;

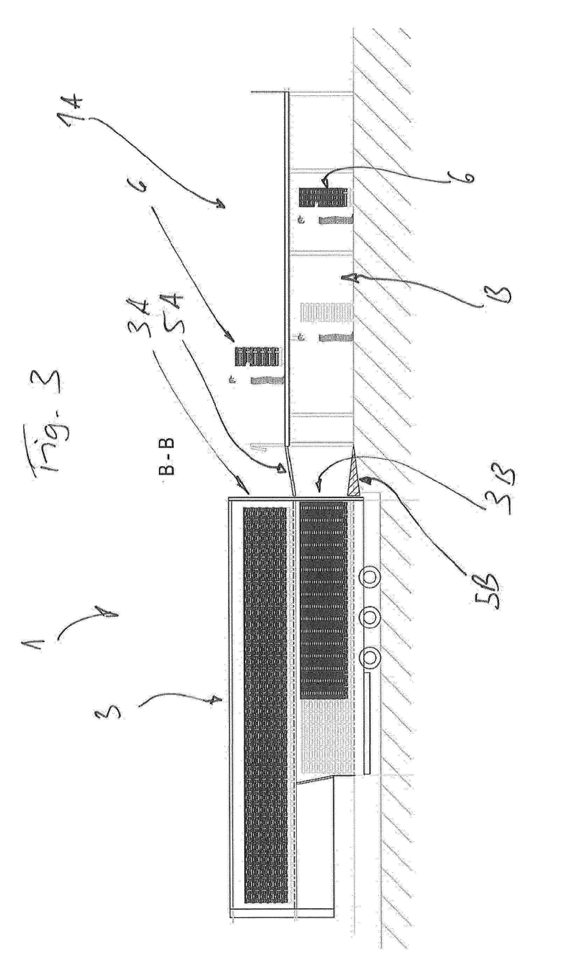

- Figure 3: shows a section view along the line B-B of figure 1;

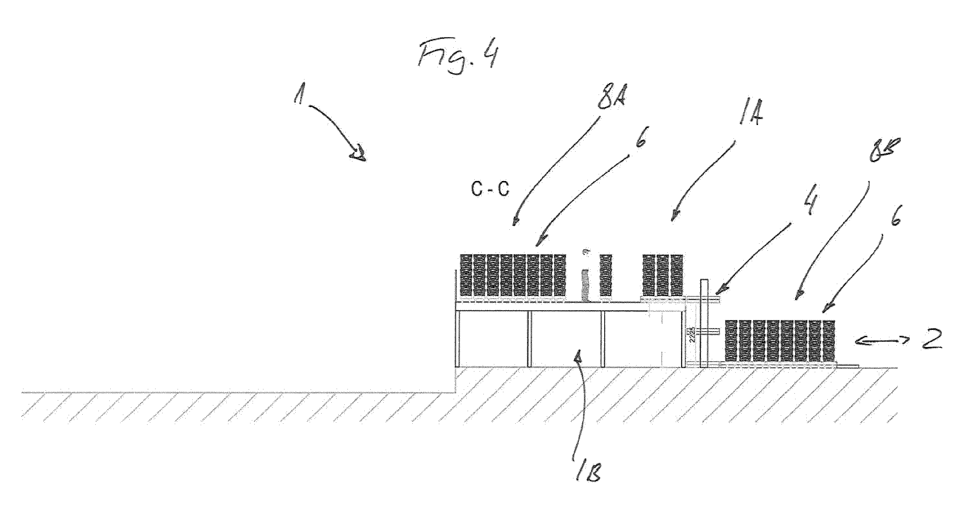

- Figure 4: shows a section view along the line C-C of figure 1;

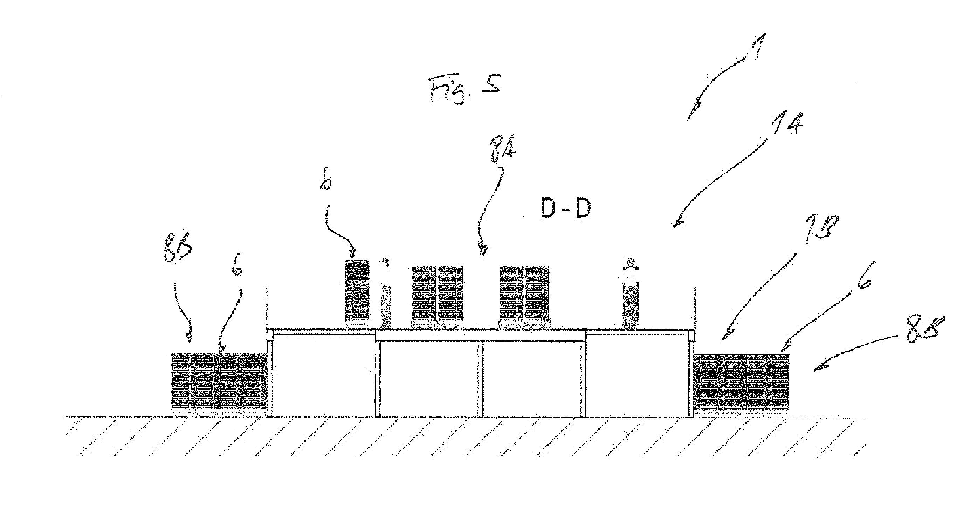

- Figure 5: shows a section view along the line D-D of figure 1; and

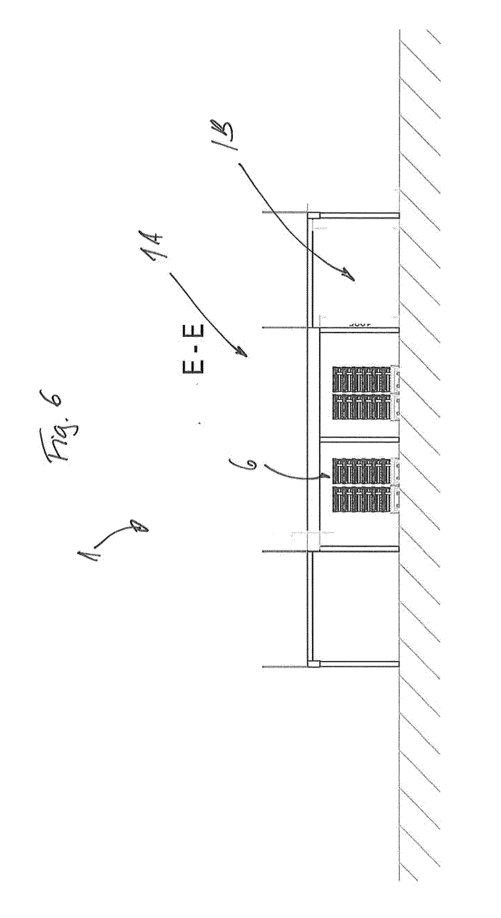

- Figure 6: shows a section view along the line E-E of figure 1.

In the figures a loading and unloading dock 1 for double deck vehicles 3 (or their trailers) of a distribution warehouse 2 is shown.

The loading and unloading dock 1 has simultaneous access to both deck levels 3A, B of the vehicle 3 by using a dock with two levels 1A, B.

The loading dock levels 1A, B are positioned between the entrance of the double deck vehicle 3 and a lift 4. By moving the lift 4 away from the vehicle/trailer, access to both levels 3A, B is free and these can be loaded in parallel from the dock levels 1A, B.

Access from the two loading dock levels 1A, B to the lower deck 3A and an upper deck levels 3B f the double deck vehicle 3 is provided by an adjustable bridge 5A, B on each level, so that independent of the vehicle's deck levels the two loading levels can be easily accessed.

The (loading) process works by firstly bringing the loads 6 to be shipped to the dispatch area by either manual or automation means, these loads are then marshaled on the ground floor 1A and/or the upper floor 1 B, which correspond to the two levels of the loading dock, to await loading.

The vehicle 3 is docked at the dock door 7 in the usual manner and an operator will lower an adjustable bridge 5 from both the lower level and the upper level into the vehicle so unloading and loading can begin.

When loading the lower deck 1 B, loads are just moved from the marshalling area 8B to the vehicle. For the upper deck 1A, loads can be raised from the ground floor infeed by the lift 4.

By manual means or by automation, all loads can be then marshalled in a small area 8A of the upper loading dock level 1A while unloading is still in progress, thus saving time.

Once the vehicle loading decks 3a, B are empty the loads 6 are then moved into the vehicle 3 on both the upper and lower levels 1A, B simultaneously. Once complete the vehicle 3 can then move off and the process repeats itself.

Obviously the unloading process is performed in reverse but analogous order.

## Claims

1. Method loading or unloading of double deck vehicles having two decks for carrying cargo, namely a lower deck and an upper deck at least partially on top of the lower deck, in which at least one lifting means are used to raise and lower the cargo, especially dollies and or pallets, between the lower and upper deck levels, **characterized in that**
loading or unloading of both decks of the double deck vehicle is performed simultaneously by providing access to both the lower and upper level of the vehicle at the same time.

2. Method according to claim 1, **characterized in that** simultaneous access to both deck levels is provided by using a two story/level loading dock, which is positioned between the double deck vehicle and the lifting means.

3. Method according to claim 2, **characterized in that**, access from the two loading dock levels to the lower deck and an upper deck levels of the double deck vehicle is provided by an adjustable bridge on each level.

4. Method according to claim 2 or 3, **characterized in that** the upper and/or lower loading dock level is provided with a marshalling area.

5. Method according to any previous claim, **characterized in that** at least two lifting means are provided, especially one lifting means is used for raising and one lifting means is used for lowering cargo, independently of each other.

6. Method according to any previous claim, **characterized in that** it is performed by operators and/or with the help of automated devices.
